# EUROPEAN PATENT APPLICATION

(11) **EP 2 221 211 A2**
(43) Date of publication of application: **25.08.2010**
(21) Application number: 10154328.8
(22) Date of filing: 23.02.2010
(51) Int. Cl.: B60N 2/24, B60N 2/42

(54) **Suspension system for an armored vehicle**

(30) Priority: 23.02.2009 IL 19718009
(71) Applicant: Plasan Sasa Ltd, 13870 M.P. Marom Hagalil (IL)
(72) Inventor: Elhanati, Zohar, 12315, M.P. Galil Eylion (IL); Kachtan, Yoash, 12235, Kibbutz Dafna (IL)
(74) Representative: Modiano, Micaela Nadia

(57) **Abstract**

A suspension system for an armored vehicle includes a gunner platform (20) and a suspension apparatus (22) which holds the gunner platform in a suspended position. The gunner platform is spaced from the floor (14) and the roof (16) of the armored vehicle. The suspension elements of the suspension apparatus include non-rigid elongated elements (38,40) which hold the gunner platform in the suspended position.

## Description

### FIELD OF THE INVENTION

This invention relates to a suspension system, and in particular relates to a suspension system disposed inside an armored vehicle adapted to hold a person spaced from the floor of the vehicle.

### BACKGROUND OF THE INVENTION

Armored combat vehicles are known to be equipped with a weapon mounted on an external portion thereof. One example of such weapon is a gun mounted on a roof of a vehicle. To access such gun for operation thereof, a gunner usually extends a portion of his body through an opening in the roof of the vehicle. As will be readily understood, the gunner normally retains within the vehicle as much of his body as possible to minimize his exposure to an enemy. In order for the gunner to reach the roof and extend through the opening thereof, the vehicle is often equipped with a gunner platform, upon which the gunner may stand.

### SUMMARY OF THE INVENTION

In accordance with one aspect of the present invention, there is provided a suspension system for use in an armored vehicle having a floor and a roof with an opening formed therein; the suspension system comprising a gunner platform and a suspension apparatus adapted to hold the gunner platform in a suspended position spaced from the floor and the roof of the vehicle; the suspension apparatus comprising non-rigid elongated suspension elements, and being free of rigid elongated elements, adapted to hold the gunner platform in said suspended position.

When a vehicle with such suspension system, i.e. with a gunner platform held spaced from the floor and roof only via elongated elements which are non-rigid, is subjected to sudden external forces thereunder, such as those caused by an explosion underneath the vehicle, there are increased chances that an occupant standing on such gunner platform will escape injury since the vehicle floors upward projecting motion caused by said external forces will not bridge the space to reach the occupant.

Non-rigid elongated suspension elements may be ropes, straps or other elements which do not transfer compressive forces from the vehicle's floor to the gunner platform during an explosion. To elaborate, if the non-rigid elongated suspension elements in the example above were ropes, during the explosion the ropes would normally bend as the floor becomes more proximate to the gunner platform, thus significant compressive forces would not transferred from the floor of the vehicle to the gunner platform and hence an occupant standing thereon.

The gunner platform may comprise a flat and rigid upper surface having an area of at least 400mm². The upper surface may be free of uneven surfaces. The upper surface may be a non-slip surface.

When a gunner uses such gunner platform, i.e. having a flat and rigid upper surface with a sufficiently large area, the gunner may have less of a tendency to trip or stumble when circling on the platform during operation of a weapon mounted outside of the vehicle, due to the absence of uneven surfaces.

The suspension system may further comprise a connection arrangement. The connection arrangement may be for connecting said elongated suspension elements to the gunner platform. The connection arrangement may be for connecting said elongated suspension elements to the floor and roof of the vehicle. The connection arrangement may be for connecting said elongated suspension elements to the gunner platform and the floor and roof of the vehicle. The connection arrangement and/or the suspension apparatus may be adapted to allow the gunner platform in its suspended position to be moved relative to said opening. The motion of the gunner platform in its suspended position may be vertical and/or horizontal with respect to the opening.

The suspension system may further comprise a seat whose construction incorporates the gunner platform (hereinafter 'combined seat-platform'), and the suspension apparatus may be adapted to hold such combined seat-platform construction, and hence the gunner platform in the suspended position. The seat may comprise one portion configured for sitting thereon and another portion, different to the portion configured for sitting thereon, configured for standing thereon (i.e. a platform). The latter portion may have any of the gunner platform features mentioned above.

In particular, when the seat has a seat portion and a back portion, the gunner platform may be mounted on the back portion. The back portion may comprise opposite first and second major surfaces. In such case the first major surface may be more proximate to the seat portion than the second major surface, and the gunner platform may be secured to the second major surface. The back portion of the seat may be pivotally connected to the seat portion, and the seat may be adapted to be brought between an open state and a closed state, wherein in the open state the back portion is adapted to be substantially vertical, i.e. oriented transversely to the seat portion, and in the closed state the back portion is adapted to be substantially horizontal, i.e. oriented substantially parallel to the seat portion. The back portion may further comprise opposite top and bottom edges, and a protective cover pivotally connected to the top edge thereof. Such protective cover may be useful when the combined seat-platform is positioned in the vehicle close to objects that may be accidentally damaged during use of the gunner platform.

The provision of a seat and gunner platform in a single suspended construction allows for the reduction of their total weight relative to them being formed as two separate units, and for their occupying a single spatial location, due to which space conservation in an armored vehicle is facilitated.

The suspension system may further comprise a base held by said suspension apparatus with a combined seat-platform mounted thereon.

The suspension system may also comprise one or more further seats mounted on the base in addition to the combined seat-platform. In a case where there are two such additional seats, they may be positioned on opposite sides of the combined seat-platform.

The combined seat-platform may be adapted to be pivotally mounted on the base between a seat position and a platform position, and when in the seat position, the seat may be held by the base in a static manner relative to the base, and, when in the platform position, the platform may be free to pivot relative the base. In a case where the platform is mounted on the back portion, and the back portion may pivot relative to the seat portion, the platform may pivot together with the back portion. In a case where the platform is mounted on the back portion, and the combined seat-platform may pivot relative to the base, the platform may pivot together with the combined seat-platform.

In a case where the combined seat-platform is adapted to be pivotally mounted on the base between a seat position and a platform position, the suspension system may further comprise at least one securing mechanism adapted to be brought between a locked stated and an unlocked state. When the combined seat-platform is in the seat position and the securing mechanism is in the locked state, the at least one securing mechanism may hold the seat-platform in the seat position. When the at least one securing mechanism is in the unlocked state, the securing mechanism does not prevent the seat-platform from being brought to the platform position. The seat may comprise two securing mechanisms, one on either side thereof. In such case each securing mechanism may need to be operated to arrest pivotal motion of the seat relative to the base or to allow such motion. The use of two securing mechanisms may provide more safety than a single securing mechanism since accidentally bringing one of the securing mechanisms to an unlocked state will not cause the combined seat-platform to have an unwanted transition to the platform state.

In a case where a suspension system, having a combined seat-platform construction of any of the above embodiments, is adapted to be brought from a seat position to a platform position for a user to stand thereon, to ensure stability of the gunner platform the suspension apparatus may comprise an upper elongated suspension element having first and second ends, the first end of the upper elongated suspension element being secured to the back portion of the seat, and the second end of the upper elongated suspension element comprising a fastening element. The fastening element of said second end may be adapted to be detachably-attachable to a connection element on the roof of the vehicle. The fastening element may be a hook-shaped fastener or a carabiner. In accordance with another aspect of the present invention, there is provided a method for providing a gunner platform in an armored vehicle having a floor and a roof, with a suspended position spaced from the floor and the roof, comprising
a) providing a suspension system comprising a seat, a gunner platform and a suspension apparatus adapted to hold the seat and gunner platform in a suspended position spaced from the floor and the roof of the vehicle; the seat comprising a seat portion and a back portion; the seat portion and back portion having adjacent faces for a user to contact, when seated thereon; the suspension apparatus comprising non-rigid elongated suspension elements, and being free of rigid elongated elements, adapted to hold the seat and the gunner platform in the suspended position;
b) bringing the suspension system to a first state allowing the user to be seated thereon;
c) bringing the suspension system to a second state wherein the gunner platform is resting on the seat, the gunner platform being disposed above the seat portion in a substantially horizontal position, allowing a user to stand on the gunner platform.

The method may include a suspension system having any of the features described above.

In accordance with a further aspect of the present invention, there is provided a vehicle comprising a suspension system having any of the features described above.

It should be noted that for the purposes of the specification and the claims that:
- the term "substantially horizontal orientation" or like phrases, when used with reference to an element upon which people may be standing or seated, may include a slight inclination away from the horizon, as long as an element or person may remain standing or seated on such element without sliding thereof;
- the term passenger compartment means a compartment designed to accommodate more than one person therein; and
- the term "elongated suspension elements", unless explicitly qualified by the word "rigid", refers only to non-rigid elements. The term "non-rigid elements" is defined for the purposes of the specification and claims as elements which do not transfer at least a majority of compressive force exerted thereon. The term "elongated element" means an element such as a rope, cable and strap, or the like, whose length is essentially greater then its width/thickness. When it is stated that elongated suspension elements are adapted to suspend a platform, a seat, a base or other structure, this means that the suspension elements are sufficiently strong to suspend such structure with any objects mounted thereon, and also to bear the weight of a user thereon.

According to a still further aspect of the invention, there is provided a seat designed for the suspension thereof, directly or indirectly, in a vehicle, said seat having a construction incorporating therein a gunner platform. The seat may have any of the features described above.

Additionally, according to any of the aspects above, the vehicle:
- may be a ground vehicle;
- may have a passenger compartment, within which the suspension system is disposed.

Further, the suspension system according to any of the aspects above may have any of the following features:
- the suspension system may be configured to have a first position, wherein a user thereon is disposed completely within the vehicle, and a second position wherein the user is partially protruding from the opening of the vehicle;
- the suspension system may comprise a top surface for standing and/or sitting thereon, the suspension system being configured to bring the top surface to a first portion at a first height, and a second position at a second height which is higher than the first height;
- the combined seat-platform may be configured with a seat portion which is normally positioned with a top surface thereof at a first height, for sitting thereon, and the gunner platform may have an operative position, for standing thereon, with a top surface thereof at a second height higher than the first height;
- the suspension system may further comprise a gunner harnesses configured to hold a user on the gunner platform; and
- the non-rigid elongated suspension elements of the suspension system may be connected to both the floor and the roof of the vehicle.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1A** is a schematic side view of an internal portion of a vehicle comprising an example suspension system in accordance with the present invention;
**Fig**. **1B** is a schematic side view of the vehicle and suspension system in Fig. 1A, with a portion of the suspension system in a different position;
**Fig. 2A** is a schematic side view of an internal portion of a vehicle comprising a further example of a suspension system in accordance with the present invention, in a seat position;
**Fig. 2B** is a schematic side view of the vehicle and suspension system in Fig. 2A, in a platform position;
**Fig. 2C** is a schematic plan view of the vehicle and suspension system in Figs. 2A and 2B;
**Fig. 3A** is a schematic top view of an internal portion of a vehicle comprising a further example of a suspension system in accordance with the present invention, without the suspension apparatus of the suspension system being shown, and in a seat position;
**Fig. 3B** is a schematic side view of the suspension system in Fig. 3A, showing the suspension apparatus, and in a transitional position between a seat position and a platform position;
**Fig. 3C** is a schematic top view of the suspension system in Figs. 3A and 3B, showing the suspension apparatus, and in a platform position;
**Fig. 4A** is a schematic top view of a securing mechanism and a portion of a seat with an anchoring element, in a locked state;
**Fig. 4B** is the schematic top view of the securing mechanism, seat and anchoring element in Fig 4A, in an unlocked state; and
**Fig. 4C** is a schematic top view of the securing mechanism in Figs. 4A and 4B, in an unlocked state.

### DETAILED DESCRIPTION OF EMBODIMENTS

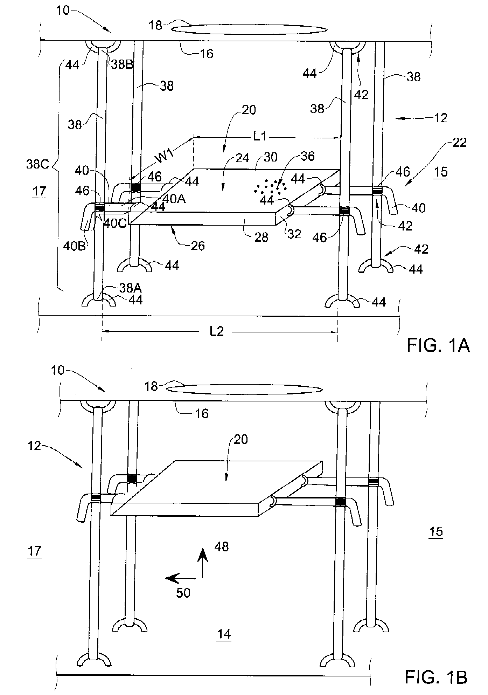

Referring now to the drawings wherein like reference characters designate like or corresponding parts throughout several views, there is shown in Fig. 1A, a portion of a passenger compartment of an armored ground vehicle generally designated by the numeral 10, comprising a suspension system generally designated by the numeral 12.

The vehicle 10 comprises a floor 14, a roof 16, a rear section 15 and a front section 17. The rear section 15 is less proximate to the driver's seat (not shown) than the front section 17. The roof 16 is formed with an opening 18 of sufficient size to allow a person (not shown) to extend therethrough.

The suspension system 12 comprises a gunner platform 20 and a suspension apparatus generally designated by the numeral 22.

The gunner platform 20 has a plate-like shape, including opposite upper and lower surfaces (24,26), first and second side edges (28,30), and rear and front side edges (32,34). The upper surface 24 of the gunner platform 20 is flat and is coated with a non-slip coating, a portion of which is schematically shown and designated by the numeral 36. The gunner platform 20 is, in this example, made of aluminium which provides a light weight, yet suitable material for the required purposes. The length of the gunner plate, extending between the front and rear edges thereof and designated as L1, in this example is 400mm. The width of the gunner plate, extending between the first and second side edges thereof and designated as W1, in this example is 400mm.

The suspension apparatus 22 comprises substantially vertical and substantially horizontal non-rigid elongated suspension elements (38,40) and a connection arrangement generally designated by the numeral 42. Each of the elongated suspension elements have a first end (38A,40A), a second end (38B,40B) and a central portion (38C,40C) extending therebetween.

The substantially vertical elongated suspension elements 38 are four high strength straps extending from the floor 14 of the vehicle 10 to the roof 16 thereof.

The substantially horizontal elongated suspension elements 40 are four high strength straps. Two of the substantially horizontal elongated suspension elements 40 extend from the rear edge 32 of the gunner platform to two of the substantially vertical elongated suspension elements 38, and two of the substantially horizontal elongated suspension elements 40 extend from the front edge 34 of the gunner platform to two of the substantially vertical elongated suspension elements 38.

The connection arrangement 42 includes connection elements in the form of brackets 44 attached to the floor 14 and roof 16 of the vehicle 10, as well as to the rear 32 and front edges 34 of the gunner platform 20. The connection arrangement 42 further includes fastening elements 46 in the form of clamps, for selectively clamping and unclamping the substantially horizontal elongated suspension elements 40 to the substantially vertical elongated suspension elements 38.

In view of suspension apparatus 22, it will be readily understood how a suspension system having a suspension apparatus may hold a gunner platform in different suspended positions, as desired. In the present example, one may unclamp the clamps 46 holding the substantially horizontal elongated suspension elements 40 from the substantially vertical elongated suspension elements 38 and may move the gunner platform 20 closer to the substantially vertical elongated suspension elements 38 at the rear or front portions (15,17) of the vehicle, and reclamp the clamps 46, thereby changing the suspended position of the gunner platform 20. Similarly, the clamping elements 46 may be unclamped and the gunner platform 20 may be moved in a vertical direction and the clamps 46 may be closed at an appropriate position on the substantially vertical elongated suspension elements 38 in order to secure the gunner platform at a different height. The resulting position of the gunner platform 20, being shown in Fig. 1B, where it can be seen that the gunner platform 20 has been moved upwardly (in the direction of arrow 48) and forwardly (in the direction of arrow 50) toward the front section 17 of the vehicle 10, when compared with the suspended position of the gunner platform 20 shown in Fig. 1A.

It will be understood that, for the above example, in order to allow horizontal movement of the gunner platform 20 relative to the opening 18, the combined length of the gunner platform L1, with one of the substantially horizontal elongated suspension elements 40 attached to the rear edge 32 thereof, and with one of the substantially horizontal elongated suspension elements 40 attached to the front edge 34 thereof, is considerably longer than the distance L2 between the substantially vertical elongated suspension elements 38 adjacent the rear and front sections (15,17) of the vehicle 10.

It will be appreciated that the suspension apparatus spaces the gunner platform from the floor and roof of the vehicle via the use of only non-rigid elements (i.e. only via elongated suspension elements). Therefore, during an explosion, compressive forces will not be transferred via the elongated suspension elements to the gunner platform, which may provide a suitable safety aspect for a gunner mounted on the gunner platform.

It will further be understood that a connection arrangement may include any suitable elements for fastening of elongated suspension elements to the inner surfaces of the vehicle, and to the gunner platform. For example, some options (not shown) may be, but are not limited to:
- connection elements in the form of brackets may be positioned on the side walls of the vehicle;
- substantially horizontal elongated suspension elements may be integrally fixed to the gunner platform, and/or they may comprise a fastening element/buckle which allows the lengthening and shortening thereof; in the latter case there may be no need for clamps; and
- elongated suspension elements may be connected to each other in any suitable manner, for example the elongated suspension elements may comprise any number of openings by which the suspension elements perpendicular thereto may be slotted therethrough, and/or tied thereto.

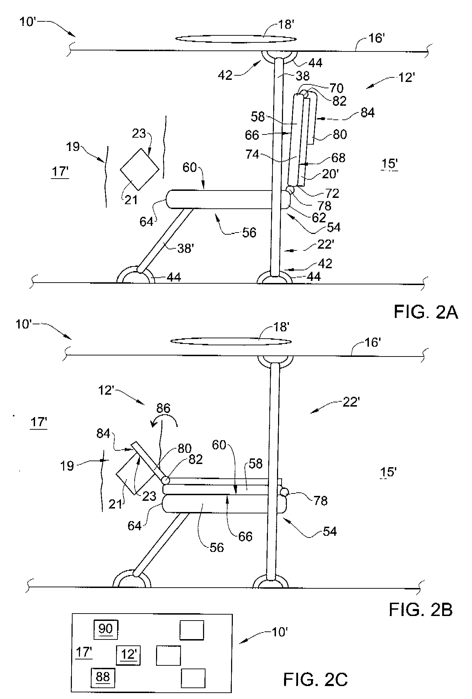

Referring now to Figs. 2A and 2B, there is shown a portion of a passenger compartment of a vehicle generally designated by the numeral 10', comprising a suspension system generally designated by the numeral 12'.

The vehicle 10' comprises a floor 14', a roof 16', a rear section 15', a front section 17', a front dashboard 19, and a monitor 21 mounted on the dashboard 19. The rear section 15' is less proximate to the driver's seat (not shown) than the front section 17'. The roof 16' is formed with an opening 18' of sufficient size to allow a person (not shown) to extend therethrough. The monitor 21 has a screen 23 facing the rear section 15' of the vehicle 10'.

The suspension system 12' comprises a gunner platform 20', a suspension apparatus generally designated by the numeral 22', a seat, generally designated as 54.

The seat 54 has mounted thereon the gunner platform 20' and therefore constitutes a combined seat-platform, which is held in a suspended position by the suspension apparatus 22'. The seat 54 further comprises a seat portion 56, a back portion 58, a first pivot element 78, a protective cover 80, and a second pivot element 82.

The seat portion 56 has an upper cushioned surface 60, and opposite rear and front edges (62,64).

The back portion 58 comprises opposite first and second major surfaces (66,68), opposite top and bottom edges (70,72), and opposite first and second side edges (74,76) (the second side edge 76 not being shown).

The first major surface 66 of the back portion 58 is more proximate to the upper surface 60 of the seat portion 56 than the second major surface 68 of the back portion 58.

The gunner platform 20' is mounted on the second major surface 68 of the back portion 58.

The first pivot element 78 joins the back portion 58 to the rear edge 62 of the seat portion 56 in a pivotal manner.

The second pivot element 82 joins the back portion 58 to the protective cover 80 in a pivotal manner.

The protective cover 80 has a major surface 84 having a surface area approximately the same as a surface area of the screen 23.

In operation, referring first to Fig. 2A, it is seen that the suspension system 12' is in a seat position, and therefore the seat 54 is positioned with the back portion 58 oriented substantially vertically, so that a user may sit on the seat 54.

With reference now to Fig. 2B:
- the back portion 58 has been pivoted from the substantially vertical position in Fig. 2A to a substantially horizontal position in Fig. 2B, bringing the first major surface 66 of the back portion 58 into engagement with the upper surface 60 of the seat portion 56; and
- the protective cover 84 has been pivoted in the direction of arrow 86 to cover the screen 23 of the monitor 21.

It is seen that the suspension system 12' is in a platform position, and therefore the gunner platform 20' has a substantially horizontal orientation, so that a user (not shown) may stand thereon. The screen 21 is protected from accidental impact from the feet of the person standing on the gunner platform 20' by the protective cover 84.

It will be noted that a gunner will normally need a seat to rest on when the weapon above the vehicle is not in use, therefore when the suspension system is not being used as a gunner platform it will be used as a seat.

It will be further noted that while such design provides benefits of conservation in space and weight by having a dual seat and gunner platform, the particular arrangement of the suspension apparatus is not necessary to achieve this advantage, and neither is the use of a protective cover.

Features of the embodiment described may be advantageous when the opening in the roof is close to the front section of the vehicle, since the vehicle's dashboard will therefore be close to the suspension system comprising the gunner platform.

With attention drawn to Fig. 2C, it may be understood that the position of the suspension system 12' may be at a front section 17' of the vehicle 10', between a driver's seat 88 and another seat at the front of the vehicle 90.

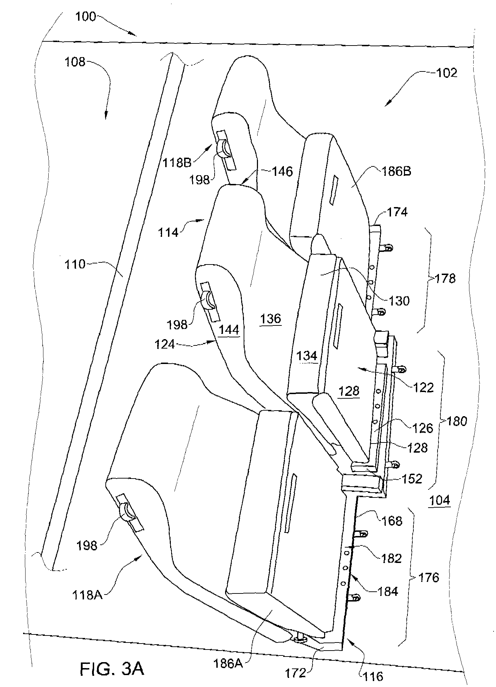

Drawing attention to Figs. 3A - 3C, there is shown a vehicle 100 comprising a suspension system generally designated as 102.

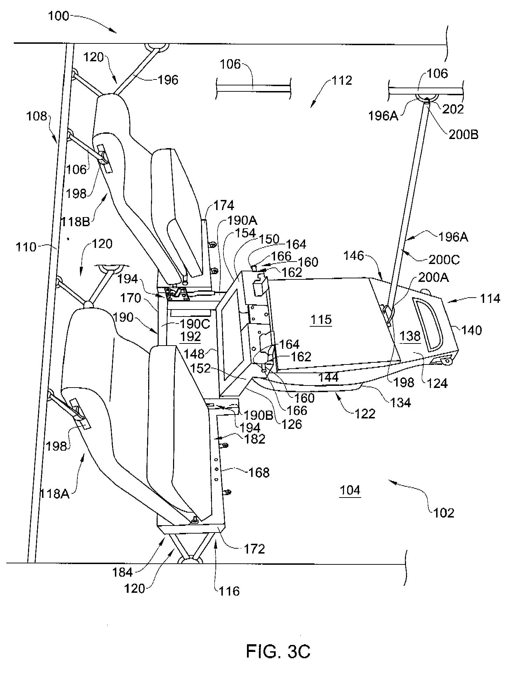

The vehicle 100 comprises a floor 104, a roof 106, a rear section 108, and a rear wall 110. The roof 106 is formed with an opening 112 (Fig. 3C) of sufficient size to allow a person (not shown) to extend therethrough.

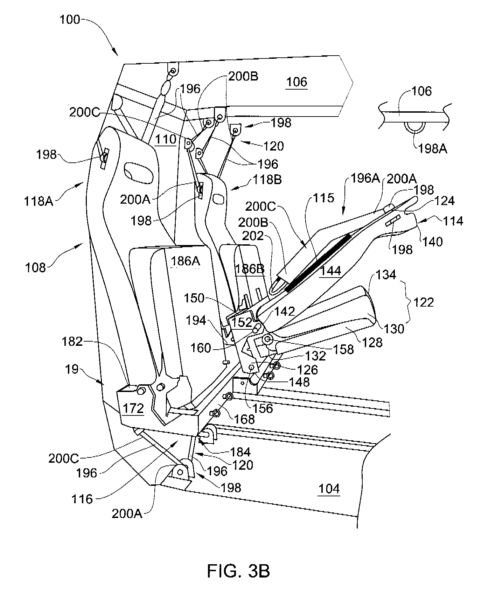

The suspension system 102 comprises a first seat, generally designated as 114, a gunner platform 115 mounted on the first seat 114, a base 116 upon which the seat 114 is mounted, two additional seats (118A,118B) mounted on the base 116 on opposite sides of the first seat 114, and a suspension apparatus (Fig. 3B), generally designated by the numeral 120, holding the base 116 and the seats (116,118A,118B) in a suspended position, spaced from the floor 104 and roof 106 of the vehicle 100.

The first seat 114 has mounted thereon the gunner platform 115 and therefore constitutes a combined seat-platform, which is held in a suspended position by the suspension apparatus 120.

The first seat 114 comprises a seat portion 122, a back portion 124, and a seat-base 126.

The seat portion 122 comprises a rigid support section 128, a cushioned section 130 attached to the support section 128, and opposite rear and front edges (132,134) (Fig. 3B).

The back portion 124 comprises opposite first and second major surfaces (136, 138, seen in Figs. 3A and 3C, respectively), opposite top and bottom edges (140, 142, Fig. 3B), and opposite first and second side edges (144,146).

The seat-base 126 is cushioned, and comprises opposite front and rear edges (148,150), and opposite first and second edges (152,154, best seen in Fig. 3C) extending between the front and rear edges (148,150).

The front edge 148 comprises a front-pivot 156 (Fig. 3B), about which the seat-base 126 is connected to the base 116 in a pivotal manner.

The rear edge 150 comprises mechanical stoppers 158 (best seen in Fig. 3B), for safely halting motion of the seat-base 126, when the first seat 114 is brought to the seat position shown in Fig. 3A.

The first and second edges (152,154) each comprises a front-pivot 156 (Fig. 3B), about which the seat-base 126 is connected to the base 116 in a pivotal manner, a central-pivot 158 (Fig. 3B), about which the seat portion 122 is connected to the seat-base 126 in a pivotal manner, and two outwardly projecting anchoring elements 160 (best seen in Fig. 3C).

Drawing attention to Fig. 3C, it can be seen that each anchoring element 160, in this example, is a cylindrical metal bar having a first end 162 and a second end 164. The first end 162 is fixed to a seat-base 126 of the first seat 114. The second end 164 having an disc-shaped mechanical stopper 166 affixed thereto.

The base 116 is made of mild steel, and comprises opposite front and rear edges (168,170, Fig. 3C), and opposite first and second edges (172,174, best seen in Fig. 3C) extending between the front and rear edges (148,150). Drawing attention to Fig. 3A, it can be seen that the base 116 further comprises a first section 176, adjacent the first edge 172, a second section 178, adjacent the second edge 174, and a central section 180 extending between the first and second sections (178,178). Additionally, the base 116 comprises an upper face 182 and a lower face 184.

The two additional seats (118A,118B) are mounted respectively on the upper face 182 of the first section 176 and second section 178 of the base 116, in a manner which allows the seat portions thereof (186A,186B) to pivot upwardly when not in use.

As best seen in Fig. 3C, the central section 180 comprises a frame 190 extending upwardly from the upper face 182.

The frame 190 includes side-frame elements (190A,190B) and a rear frame-element 190C. The frame 190 is formed with a recess 192 bounded by the side-frame elements (190A,190B) and the rear frame-element 190C.

Each of the side-frame elements (190A,190B) has a securing mechanism 194 mounted thereon, which will be described in further detail hereinafter.

As best seen in Fig. 3B, the suspension apparatus 120 comprises elongated suspension elements 196 and a connection arrangement comprising a plurality of brackets secured to the vehicle 100 and suspension system 102, and generally designated by the numeral 198.

Each of the elongated suspension elements 196 have a first end 200A, a second end 200B and a central portion 200C extending therebetween. The elongated suspension elements 196 being connected at least by their first and second ends (200A, 200B) to the brackets of the connection arrangement 198 for holding the base 116 and the seats (116,118A,118B) in a suspended position, spaced from the floor 104 and roof 106 of the vehicle 100.

Of note is a particular elongated suspension element, designated as 196A, which will be called the platform elongated suspension element. The platform elongated suspension element 196A is secured at the first end 200A thereof to the back portion 124, at the second major surface 138 thereof, closer to the top edge 140 than the bottom edge 142 of the back portion 124, and comprises a carabiner 202 attached to the second end 200B thereof. The length of the platform elongated suspension element 196A being designed to be sufficient to allow the carabiner 202 to reach and be secured to a particular bracket 198A, on the roof 106, when the first seat 114 is in the platform position (Fig. 3C).

It will be appreciated that the first end 200A may be attached to any appropriate place on the back portion 124 or gunner platform 115. For example the first end 200A may, alternatively, be connected to one of the brackets 198 adjacent the top edge 140 of the first seat 114.

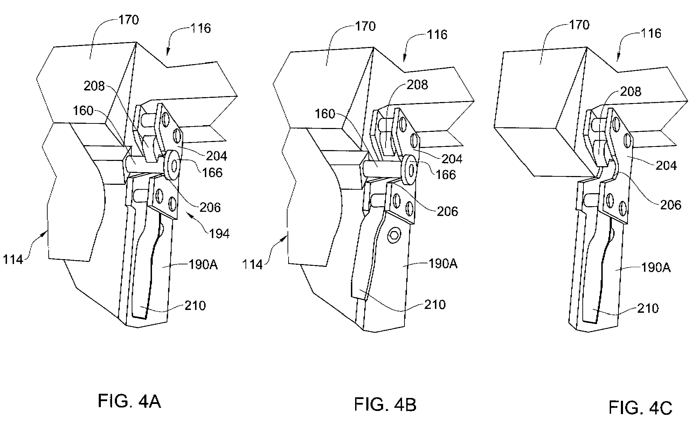

Referring now to Figs. 4A to 4C, there is shown in further detail the securing mechanism 194 seen in Figs. 3B and 3C.

The securing mechanism 194 comprises a base portion 204 having a recess formed therein 206, a tooth-shaped latch 208 adapted for movement towards and away from the recess 206, and a handle 210 adapted to move the latch 208.

The securing mechanism 194 shown in Fig. 4A, is seen in a locked state, wherein the latch 208 arrests movement of the anchoring element 160 positioned in the recess 206.

The securing mechanism 194 shown in Fig. 4B, is seen in a unlocked state, wherein the latch 208 does not arrest movement of the anchoring element 160 positioned in the recess 206.

It will be understood that in the seat-position, the first seat 114 is only connected to the base 116, and is thus held in a suspended position via the suspension elements 196.

In operation, each of the seats (114, 118A, 118B) may be brought to the seat position shown in Fig. 3A. The seats (114, 118A, 118B) may be sat on by pivoting the seat portions (122, 186A, 186B) thereof downwardly and sitting thereon. In the seat position, the securing mechanisms 194 on both sides of the first seat 114 will be in the locked state shown in Fig. 4A, to prevent the first seat 114 from pivoting forwardly when in use.

When one wishes to use the gunner platform, the first seat 114 is brought to the platform position by pulling each of the handles 210 of the securing mechanisms 194, as seen in Fig. 4A, and the first seat 114 is vacated. The first seat 114 is then pivoted via the front-pivot 156 (Fig. 3B) about the base 116, as seen in Fig. 3B. The platform elongated suspension element 196A is secured to bracket 198A via the carabiner 202, and the first seat 114 is further pivoted until it reaches the platform position, as seen in Fig. 3C.

A user may then stand on the gunner platform 115, in order to reach the opening 112 in the roof 116.

As will be understood, the platform elongated suspension element 196A anchors the back portion 124 at a desired, substantially horizontal orientation.

Additionally, it can be seen that the gunner platform is held in a suspended position without a single connection to the vehicle's floor 114 or roof 116 being through only rigid elements. To elaborate, there is always at least one non-rigid connection between the vehicle's floor 114 or roof 116 and the gunner platform.

Those skilled in the art to which this invention pertains will readily appreciate that numerous changes, variations and modifications can be made without departing from the scope of the invention mutatis mutandis. For example, it will be appreciated that the base may have different objects mounted thereon, instead of or in addition to the two peripheral seats. A seat pivotally mounted on a base, may have only one securing mechanism associated therewith. A combined seat-platform may have a pivotal back portion, or may itself be pivotal with respect to a base which it is mounted on, to bring it to a platform position. The examples given include pivotal movement as being utilized for bringing a gunner platform to a substantially horizontal position, however rotation, or a combination of rotation and pivot, or other motion may also be envisioned to bring a gunner platform to and from a substantially horizontal position from another non-use position.

## Claims

1. A suspension system for use in an armored vehicle having a floor and a roof with an opening formed therein; the suspension system comprising a gunner platform and a suspension apparatus adapted to hold the gunner platform in a suspended position spaced from the floor and the roof of the vehicle; the suspension apparatus comprising non-rigid elongated suspension elements, and being free of rigid elongated elements, adapted to hold the gunner platform in said suspended position.

2. The suspension system of Claim 1, further comprising a connection arrangement for connecting said elongated suspension elements to the gunner platform; the connection arrangement and/or the suspension apparatus being adapted to allow the gunner platform in its suspended position to be moved relative to said opening.

3. The suspension system of Claims 1 or 2, further comprising a seat whose construction incorporates the gunner platform, and the suspension apparatus being adapted to hold the seat and incorporated gunner platform in the suspended position.

4. The suspension seat of Claim 3, wherein the seat further comprises a seat portion and a back portion; the gunner platform being mounted on the back portion.

5. The suspension system of Claim 4, wherein the back portion further comprises opposite first and second major surfaces; the first major surface being more proximate to the seat portion than the second major surface; the gunner platform being secured to the second major surface; said back portion being pivotally connected to the seat portion, the back portion being adapted to be brought between an open state and a closed state; wherein in the open state the back portion is adapted to be substantially vertical, and in the closed state the back portion is adapted to be substantially horizontal.

6. The suspension system of Claim 5, wherein said back portion further comprises opposite top and bottom edges, the back portion being pivotally connected to the seat portion via the bottom edge, the back portion further comprising a protective cover pivotally connected to the top edge thereof.

7. The suspension system of Claim 3, further comprising a base held by said suspension apparatus together with said seat mounted thereon.

8. The suspension system of Claim 7, further comprising at least one additional seat mounted on the base.

9. The suspension system of Claim 7, wherein said seat is adapted to be pivotally mounted on the base between a seat position and a platform position; and when in the seat position, the seat is held by the base in a static manner relative to the base, and, when in the platform position, the platform is free to pivot relative to the base.

10. The suspension system of Claim 9, further comprising at least one securing mechanism adapted to be brought between a locked stated and an unlocked state; when the seat is in the seat position and the securing mechanism is in the locked state, the securing mechanism holds the seat in the seat position, and, when the securing mechanism is in the unlocked state, the securing mechanism does not prevent the seat from being brought to the platform position.

11. The suspension system of Claim 5 or 9, wherein said suspension apparatus comprises an upper elongated suspension element having first and second ends, the first end of the upper elongated suspension element being secured to the back portion of the seat, and the second end of the upper elongated suspension element comprising a fastening element.

12. The suspension system of Claim 11, wherein said fastening element of the second end being adapted to be detachably-attachable to a connection element on the roof of the vehicle.

13. The suspension system of any one of Claims 1 to 12, wherein the gunner platform comprises a flat and rigid upper surface having an area of at least 400mm².

14. A method for providing a gunner platform in an armored vehicle having a floor and a roof, with a suspended position spaced from the floor and the roof, comprising
a) providing a suspension system comprising a seat, a gunner platform and a suspension apparatus adapted to hold the seat and gunner platform in a suspended position spaced from the floor and the roof of the vehicle; the seat comprising a seat portion and a back portion; the seat portion and back portion having adjacent faces for a user to contact, when seated thereon; the suspension apparatus comprising non-rigid elongated suspension elements, and being free of rigid elongated elements, adapted to hold the seat and the gunner platform in the suspended position;
b) bringing the suspension system to a first state allowing the user to be seated thereon;
c) bringing the suspension system to a second state wherein the gunner platform is resting on the seat, the gunner platform being disposed above the seat portion in a substantially horizontal position, allowing a user to stand on the gunner platform.

15. A vehicle comprising a floor, a roof with an opening formed therein, and a suspension system; the suspension system comprising a gunner platform and a suspension apparatus adapted to hold the gunner platform in a suspended position spaced from the floor and the roof of the vehicle; the suspension apparatus comprising non-rigid elongated suspension elements adapted to hold the gunner platform in the suspended position, and being free of rigid elongated elements adapted to hold the gunner platform spaced from the floor and roof.

16. A seat designed for the suspension thereof, directly or indirectly, in a vehicle, said seat having a construction incorporating therein a gunner platform.
